# EUROPEAN PATENT APPLICATION

(11) **EP 4 099 253 A1**
(43) Date of publication of application: **07.12.2022**
(21) Application number: 21214607.0
(22) Date of filing: 15.12.2021
(51) Int. Cl.: G06Q 30/06

(54) **SERVICE SERVER, METHOD, AND COMPUTER-READABLE STORAGE MEDIUM FOR PROVIDING TRACKING SERVICE FOR TRANSPORTATION DEVICE BASED ON BLOCKCHAIN NETWORK SYSTEM**

(30) Priority: 04.06.2021 KR 20210072477; 04.06.2021 KR 20210072478; 04.06.2021 KR 20210072479
(71) Applicant: Wrightbrothers Co., Ltd., Seoul 04384 (KR)
(72) Inventor: KIM, Hee Soo, 04384 Seoul (KR)
(74) Representative: BCKIP Part mbB

(57) **Abstract**

A service server providing a tracking service for a transportation device based on a blockchain network system is provided. The service server includes a memory and a processor. The processor receives an information disclosure request for trading, distribution, or repair of the transportation device from a first terminal of an entity holding a token specifying the transportation device or a second terminal of an organization performing trading, distribution, or repair of the transportation device as a proxy; discloses information on the transportation device to a platform providing the service based on the information disclosure request; receives, from a third terminal of an entity purchasing the transportation device, transmission information on currency at a price corresponding to the token; and transmits the token to a node managed by the third terminal and transferring the currency to an account managed by the first terminal based on verification of the transmission information.

## Description

### TECHNICAL FIELD

The present disclosure relates to a technology that provides a service for recording and tracking events that occur over the life cycle of a transportation device using blockchain technology.

### BACKGROUND

Recently, a sharing platform that provides a service for renting a transportation device such as a bicycle and an electric kickboard has appeared. Along with the emergence of a platform providing a service that exclusively trades such transportation devices, the trading volume and the amount of use of various transportation devices are rapidly increasing.

Meanwhile, according to the national certification body and automobile management law regulating vehicles with an internal combustion engine such as automobiles and motorcycles, there is an obligation to officially record the change of owners, inspection/repair history, tax payment details for each vehicle, and so on. Therefore, the reliability of information recorded officially according to such a system may be guaranteed.

However, some transportation devices, such as bicycles and electric kickboards, do not have a legal obligation to record the owner of the devices or to obtain certification for manufacturing, distribution, repair, and so on. Accordingly, there is a problem that theft is relatively frequent, and it is difficult to know the details about the source and the history of repair and failure of a transportation device with certainty.

Nevertheless, since these transportation devices are easy to distribute and trade due to their relatively small size and weight compared to vehicles with an internal combustion engine, they are widely distributed through personal trading up to international export and import.

Therefore, to protect individual consumers and create a proper distribution ecosystem, there is a need for a method by which entities related to transportation devices voluntarily obtain certification for the transportation devices and a technology enabling authorized information on certification, repair, and trading of transportation devices to be shared not only in a specific country but also globally.

(Related Art) Korean Patent No. 10-2121475

### SUMMARY

In view of the above, the embodiments of the present disclosure provide a technology that independently creates recordings of events occurring throughout the life cycle of each transportation device, such as manufacturing, distribution, purchase, sale, second-hand trading, repair, use, loss, and disposal; and enables entities related to transportation devices to voluntarily perform reliable recording.

Technical objects to be achieved by the present disclosure are not limited to those described above, and other technical objects not mentioned above may also be clearly understood from the descriptions given below by those skilled in the art to which the present disclosure belongs.

In accordance with an aspect of the present disclosure, there is provided a service server providing a tracking service for a transportation device based on a blockchain network system, the service server including: at least one memory storing instructions for performing predetermined operations; and at least one processor configured to execute the instructions by being coupled operatively with the at least one memory. The at least one processor is configured to receive an information disclosure request for trading, distribution, or repair of the transportation device from a first terminal of an entity holding a token specifying the transportation device or a second terminal of an organization performing trading, distribution, or repair of the transportation device as a proxy; disclose information on the transportation device to a platform providing the service based on the information disclosure request; receive, from a third terminal of an entity purchasing the transportation device, transmission information on currency at a price corresponding to the token; and transmit the token to a node managed by the third terminal and transferring the currency to an account managed by the first terminal based on verification of the transmission information.

The processor may further be configured to receive a request for generating the token specifying the transportation device from the first terminal when the entity of the first terminal is a manufacturer that has manufactured the transportation device; and issue the token specifying the transportation device to a node managed by the first terminal based on the token generation request. Further, the token may be issued based on a smart contract compliant with a rule specifying to move the token to another blockchain account only when the owner of the transportation device is changed.

Further, the information disclosure request includes information on a margin to be added to a price about the token by an entity holding the token. In disclosing the information, the processor may additionally issue a token corresponding to the margin information on the transportation device, and the processor may generate, in the blockchain network system, a smart contract compliant with a rule specifying to additionally issue a token based on the information disclosure request by the entity holding the token.

The processor may be further configured to generate, in the blockchain network system, a smart contract compliant with a rule specifying to record change of the owner of the transportation device through change of the holder of the token by transferring the token to a node of an entity that has transmitted cryptocurrency at a price corresponding to the token when transmission of the cryptocurrency to a pre-designated contract account is confirmed, and the smart contract may include a digital instruction compliant with a rule specifying to move the token only when the owner of the transportation device is changed.

The processor may be further configured to generate, in the blockchain network system, a smart contract compliant with a rule specifying to burn a preconfigured number of tokens as a predetermined period elapses after the token is generated, and the smart contract may be activated at a preconfigured time to determine a ratio of currently issued tokens to be burned according to ratio calculation of (current year - release year + 1) * x (where x is a constant predetermined based on the information of the transportation device recorded at the time of issuing the token).

The processor may be further configured to generate, in the blockchain network system, a smart contract compliant with a rule specifying to burn a preconfigured number of tokens as a predetermined period elapses after the token is generated, and the smart contract may include a digital instruction compliant with a rule specifying to burn the token in the form of an exponentially decreasing function, a logarithmically decreasing function, or an n-th order decreasing function when the predetermined period elapses.

In the occurrence of transmission about the currency due to an information disclosure request of the second terminal, the processor may be further configured to transmit part of the currency to an account managed by the second terminal.

In the occurrence of transmission about the currency due to an information disclosure request of the second terminal, the processor may be further configured to transmit rewards of cryptocurrency carried out in the blockchain network system to a node managed by the second terminal.

The processor may be further configured to receive inspection information on a result of inspecting the transportation device from the second terminal; additionally issue or burn a token corresponding to the inspection information on the transportation device; and transmit rewards of cryptocurrency carried out in the blockchain network system to a node managed by the second terminal.

The information disclosure request may include the inspection information on the result of inspecting the transportation device by the second terminal, and, in disclosing the information, the processor may additionally issue or burn a token corresponding to the inspection information on the transportation device.

The processor may be further configured to generate, in the blockchain network system, a smart contract compliant with a rule specifying to additionally issue or burn a token mapped to the transportation device based on scores for preconfigured items to be inspected with respect to the transportation device.

The processor may be further configured to receive usage information of the transportation device from the first terminal of the entity holding the token; transmit rewards of cryptocurrency carried out in the blockchain network system to a node managed by the first terminal based on the usage information of the transportation device; and generate, in the blockchain network system, a smart contract compliant with a rule specifying to determine rewards calculated based on the usage information when a pre-designated contract account receives transaction information including the usage information and transmit the rewards of cryptocurrency carried out in the blockchain network system to the node managed by the first terminal.

The processor may be further configured to receive loss information or disposal information of the transportation device from the first terminal of the entity holding the token; freeze or burn the token based on the loss information or the disposal information of the transportation device; notify the first terminal of an inquiry based on specific information on the transportation device when the inquiry is sensed; withdraw freezing of the token when a request for restoring the token is received from the first terminal; and transmit rewards of cryptocurrency carried out in the blockchain network system to a node managed by an entity performing inquiry based on information specifying the transportation device.

In accordance with another aspect of the present disclosure, there is provided a service method performed by a service server providing a tracking service for a transportation device based on a blockchain network system, the service method including: receiving a request for generating a token specifying the transportation device from a first terminal of an entity that has manufactured the transportation device; issuing the token specifying the transportation device to a blockchain node managed by the first terminal based on the token generation request; receiving transmission information on currency at a price corresponding to the token from a second terminal of an entity purchasing the transportation device; and transmitting the token to a blockchain node managed by the second terminal and transferring the currency to an account managed by the first terminal.

In accordance with still another aspect of the present disclosure, there is provided a non-transitory computer-readable storage medium including computer-executable instructions which cause, when executed by a processor, the processor to perform the service server described above.

According to the apsects of the present disclosure, events occurring throughout the life cycle of a transportation device, such as manufacturing, distribution, purchase, sale, second-hand trading, repair, use, loss, and disposal, may be recorded using blockchain technology. For example, since the recording is carried out using a block recording method based on the consensus of full nodes certified in the blockchain ecosystem, reliability of the recording is guaranteed, and through rewarding of the entities related to the recording activity, the entities participating in the service according to the embodiment are encouraged to maintain the ecosystem voluntarily.

Further, according to the apsects of the present disclosure, each transportation device object may be specified by issuing a token using the information of the transportation device.

In addition, the price of a transportation device may be adjusted transparently by distributing a smart contract that additionally issues a token mapped to the transportation device or burn part of existing tokens to the blockchain network system depending on the situations encountered throughout the life cycle of the transportation device.

The technical effects of the present disclosure are not limited to the technical effects described above, and other technical effects not mentioned herein may be understood to those skilled in the art to which the present disclosure belongs from the description below.

### BRIEF DESCRIPTION OF THE DRAWINGS

FIG. 1 is a block diagram of a tracking service system and a blockchain network system according to one embodiment.
FIG. 2 illustrates an operation environment of a blockchain network system according to one embodiment.
FIG. 3 is a block diagram of a service server according to one embodiment.
FIG. 4 is a flow diagram of an operation performed in an example of manufacturing and distribution by a service server according to one embodiment.
FIG. 5 is a flow diagram of an operation performed in an example of end consumer sale by a service server according to one embodiment.
FIG. 6 is a flow diagram of an operation performed in an example of second-hand trading by a service server according to one embodiment.
FIG. 7 is a flow diagram of an operation performed in an example of second-hand trading via a trading agency by a service server according to one embodiment.
FIG. 8 is a flow diagram of an operation performed in an example of repair of a transportation device by a service server according to one embodiment.
FIG. 9 is a flow diagram of an operation performed in an example of using a transportation device by a service server according to one embodiment.
FIG. 10 is a flow diagram of an operation performed in an example of losing or discarding a transportation device by a service server according to one embodiment.

### DETAILED DESCRIPTION

In what follows, various embodiments of the present disclosure will be described with reference to appended drawings. However, it should be understood that the specific embodiments are not intended to limit the gist of the present disclosure to the specific embodiments; rather, it should be understood that the specific embodiments include all of the modifications, equivalents, and/or alternatives of the embodiments of the present disclosure. Regarding the description of the drawings, the same or similar constituting elements are given the same or similar reference symbol numbers.

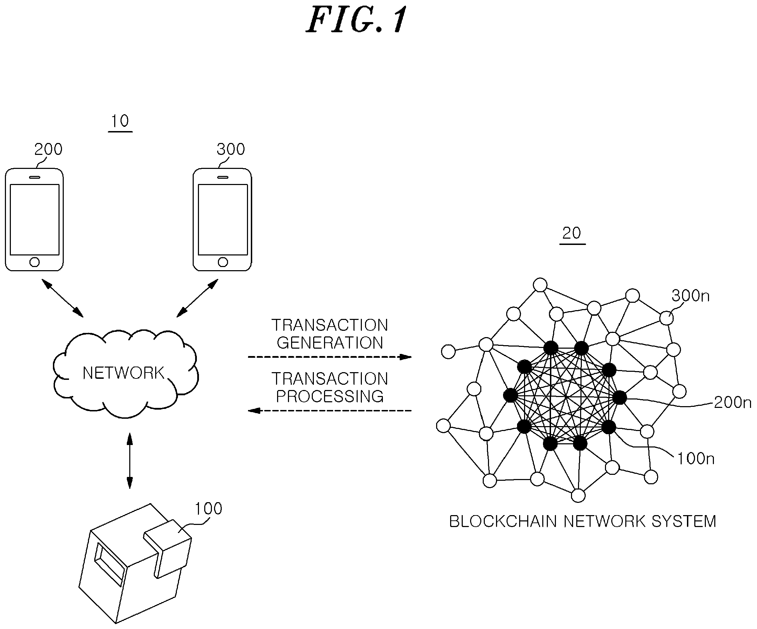

FIG. 1 is a block diagram of a tracking service system 10 and a blockchain network system 20 according to one embodiment.

The tracking service system 10 provides a service for creating records on the events that occur over the life cycle of each transportation device, such as manufacturing, distribution, purchase, sale, second-hand trading, repair, use, loss, and disposal of the transportation device and sharing the corresponding records. For example, transportation devices may include bicycles, electric bicycles, electric scooters, automobiles, motorcycles, electric kickboards, Segways, electric wheelchairs, Urban Air Mobility (UAM) vehicles, self-driving cars, drone taxis, air buses, robot taxis, and intelligent logistics delivery robots. However, the type of the transportation device to which embodiments of the present disclosure may be applied is not limited to the aforementioned examples. Rather, the present disclosure may be applied to various transportation devices that help people move or exercise, deliver goods, or move autonomously.

Referring to FIG. 1, the tracking service system 10, being linked to the blockchain network system 20, may transmit transaction information generated by the entities participating in a tracking service to the blockchain network system 20 and make a transaction process handled by the nodes which are the entities constituting the blockchain network system 20.

The tracking service system 10 according to one embodiment may include a service server 100, an organization terminal 200, and a user terminal 300.

The service server 100 is a device operated by an entity that provides a tracking service for a transportation device. Users of the tracking service may include various organizations that provide services for helping end consumers use a transportation device, such as manufacturing, distribution, and repair of transportation devices, and users who actually purchase and use a transportation device.

The service server 100 provides an application account (for example, an ID and a password) and a blockchain account (for example, a blockchain wallet, a private key, and a public key) for using a tracking service to a user of the tracking service. The user of the tracking service may use various services that will be described later by accessing the tracking service with the application account through a terminal (for example, the organization terminal 200 or the user terminal 300) managed by the user or operate as a node constituting the blockchain network by accessing the blockchain network system 20 through the blockchain account.

The organization terminal 200 is a terminal managed by an organization that provides services for helping end consumers use a transportation device, such as manufacturing, distribution, and repair of the transportation device. The organization terminal 200 may store a tracking service provided by the service server 100 and an application for accessing the blockchain network system 20. The organization terminal 200 may operate as an organization node 200n by accessing the blockchain network system 20.

The user terminal 300 is managed by an actual user who purchases and uses a transportation device. The user terminal 300 may store an application for accessing the tracking service provided by the service server 100 and the blockchain network system 20. The user terminal 300 may operate as a user node 300n by accessing the blockchain network system 20.

The service server 100, the organization terminal 200, and the user terminal 300 may be implemented by various types of devices capable of transmitting and receiving information through a network. For example, the devices may include a portable communication device, a smartphone, a computer device, a portable multimedia device, a notebook computer, and a tablet PC. Further, the service server 100, the organization terminal 200, and the user terminal 300 may be operably connected through a communication network to transmit and receive information. For example, the communication network may include a wired/wireless communication network such as a local area network (LAN), a wide area network (WAN), a virtual network, and a remote communication network.

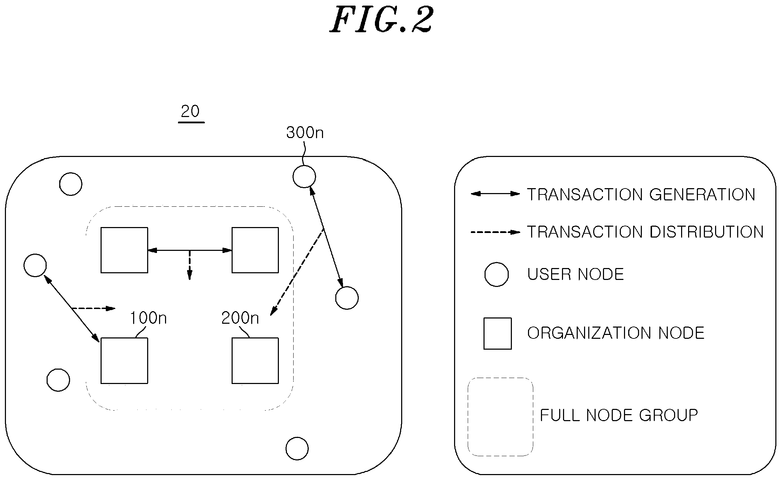

FIG. 2 illustrates an operation environment of the blockchain network system 20 according to one embodiment.

The blockchain network system 20 is a peer-to-peer network including nodes composed of a plurality of computing devices. Each node may operate as a computing device including one or more processors 120 and may have blockchain account information registered in the blockchain network system 20. The blockchain account information may include a private key and a public key. The private key may serve as a user's digital signature to generate transactions in the blockchain network system 20. The public key is the information used for identifying each node and may function as an account address in the blockchain, which holds cryptocurrency or tokens.

Referring to FIG. 2, among the nodes constituting the blockchain network system 20, a node operated by the service server 100 is referred to as a server node 100n, a node operated by the organization terminal 200 an organization node 200n, and a node operated by the user terminal 300 a user node 300n. Operations performed by the server node 100n, the organization node 200n, and the user node 300n in the blockchain network system 20 may be understood as the operations performed by the service server 100, the organization terminal 200, and the user terminal 300, respectively. According to one embodiment, the rights of the server node 100n may include the rights of the organization node 200n. Accordingly, it may be understood that the server node 100n may also perform the embodiment described based on the operation of the organization node 200n.

Each node included in the blockchain network system 20 may verify, execute, and record transactions generated by other nodes according to a protocol predetermined within the blockchain network system 20 and get rewards (for example, cryptocurrencies or tokens) for the operation.

A transaction is the information propagated through the nodes in the blockchain network system 20 to add information to the blockchain or cause a specific operation within the blockchain network system 20. For example, the transaction may include information for executing an operation related to issuing a token and an operation related to the transfer of the token. As an example, the transaction for the operation to transmit a token from the first node to the second node may include account information of the first node, account information of the second node, token information, token quantity, signature information of the first node, and information desired to be recorded together with transfer details.

In the occurrence of a transaction, the transaction may be verified based on a consensus algorithm (for example, POW, POS, or DPOS) specified in the blockchain network system 20, a verified block may be connected to a previously created block (i.e., transaction recording), and the details of a newly connected block may be propagated to other nodes.

The blockchain network system 20 according to one embodiment may form a group participating in the verification of a transaction by constructing a full node group. For example, the organization node 200n may participate in the full node group through a predetermined authentication review to verify items included in the transaction according to an embodiment to be described later and may get cryptocurrency rewards by verifying various transactions generated in the blockchain network system 20.

Block information may be stored in the blockchain, which is a transaction database shared among nodes. A blockchain may be understood as a distributed ledger where multiple nodes share the same information. A node may check the processing results of a transaction and its records by querying the blockchain.

The blockchain network system 20 may distribute and execute various smart contracts provided by various nodes. When a transaction satisfying the condition of a smart contract occurs in the blockchain network system 20, the blockchain network system 20 may cause a specific transaction to occur according to a protocol predetermined in the smart contract or execute another smart contract. For example, the service server 100 may pre-distribute instructions or a smart contract that specifies a protocol for an operation related to issuing a token and provide a specific node (for example, a full node) within the blockchain network system 20 with rights for issuing a token so that the corresponding node may issue tokens. A node authorized to issue tokens may send a transaction to the corresponding smart contract to issue a specific number of tokens. The operation compliant with the protocol of the smart contract according to the embodiment of the present disclosure may be directly performed by the full node. The smart contract used in the embodiments of the present disclosure will be described in detail in the respective embodiments to be described later.

Meanwhile, the terms "cryptocurrency" and "token" may be used interchangeably. However, the embodiments of the present disclosure define "cryptocurrency" and "token" as follows and distinguish them from each other.

"Cryptocurrency" refers to a digital exchange means paid to a node as a means of rewards for data verification and recording within one blockchain network system 20. In general, when used in this sense, cryptocurrency is also called "native cryptocurrency, native coin, or native token."

"Token" refers to a digital exchange means having a predetermined use or value that may be added after generating native cryptocurrency in one blockchain network system 20.

According to the concept of terms distinguished in the embodiment of the present disclosure, when the Ethereum blockchain system is described as an example, the cryptocurrency may mean Ethereum, and the token may mean the ERC-20 token or the ERC-721 token additionally issued by the Ethereum blockchain system according to a specific protocol.

The blockchain network system 20 according to an embodiment of the present disclosure may issue a token for specifying the object itself of each transportation device. According to one embodiment, a token may be used to specify a transportation device, and the rewards generated by verifying a transaction may become cryptocurrency. For example, in the occurrence of an event that has to be officially recorded for a transportation device, the blockchain network system 20 may generate a transaction that modifies a token to record the information on the corresponding event. Rewards for entities who voluntarily participate in the generation and verification of the corresponding transaction may be made in the form of cryptocurrency.

In other words, the token according to an embodiment of the present disclosure may be used to specify an object and record details about the object. Therefore, unless otherwise officially recorded, the blockchain network system 20 may include a smart contract that restricts the movement of a token, or recording of a transaction may be permitted only when the transaction is recognized as official by a full node.

In what follows, a block diagram of a service server 100 that provides a tracking service and a blockchain network system 20 according to one embodiment will be described.

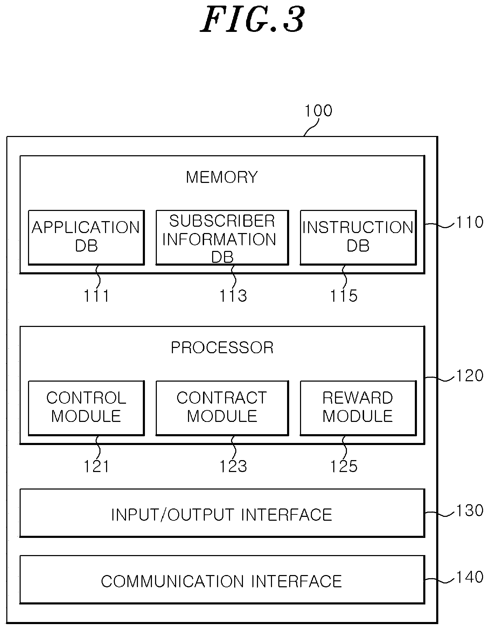

FIG. 3 is a block diagram of a service server 100 according to one embodiment.

Referring to FIG. 3, the service server 100 according to one embodiment may include a memory 100, a processor 120, and an input/output interface 130, and a communication interface 140.

The memory 110 may include an application DB 111, a subscriber information DB 113, and an instruction DB 115.

The application DB 111 may store a software program that provides a tracking service according to an embodiment of the present disclosure. The software program may include an interface for controlling the tracking service and the blockchain network system 20.

The subscriber information DB 113 may store the subscription information of the organization/user for the tracking service, the blockchain account information of the organization/user, and information transmitted and received to and from the organization/user terminal. For example, an organization's subscriber information may include information submitted by the organization to certify that the organization provides services for an end consumer to use a transportation device, such as manufacturing, distribution, repair, and trading of the transportation device. For example, a user's subscriber information may include information on the user submitted by the user having a transportation device to authorize the transportation device owned by the user. For example, the blockchain account information may include information (for example, a public key or token information) specifying a blockchain account mapped to each subscriber information.

The instruction DB 115 may store instructions to perform the operation of the processor 120. For example, the instruction DB 115 may store computer code that performs the operations corresponding to the operations of the processor 120 to be described later.

The processor 120 controls the overall operation of the service server 100. The processor 120 may implement the control module 121, the contract module 123, and the reward module 125. The processor 120 may operate the control module 121, the contract module 123, and the reward module 125 by executing the instructions stored in the memory 110.

The control module 121 may control the overall operation of the processor. The control module 121 may analyze information received from the organization terminal 200 and the user terminal 300. The control module 121 may perform a predetermined operation according to the type of received information. The control module 121 may transmit the calculated information to the outside or generate a specific transaction in the blockchain network system 20 based on the calculated information.

The contract module 123 may control the overall operation related to the blockchain network system 20. The contract module 123 may determine a protocol to be distributed over the blockchain network system 20. For example, the contract module 123 may generate and distribute a smart contract that specifies rules about issuing a token, the number of tokens to be issued, the number of tokens to be burned, the number of tokens to be added or burned when a specific condition is satisfied, a condition under which tokens may be transferred, information to be included in a transaction to trigger a smart contract, and entities allowed to trigger the smart contract. A node participating in the blockchain network system 20 may operate a smart contract by transmitting a transaction satisfying a predetermined condition according to the rules set in the smart contract. A smart contract according to an embodiment of the present disclosure will be described later in the respective embodiments.

The reward module 125 may perform the overall operation for the transfer of currency or rewards. The term "currency" used without a modifier in an embodiment of the present disclosure refers to a general means of exchange for facilitating exchange and distribution of goods and may include commodity money, digitally marked amount of a bank account, cryptocurrency, and tokens. For example, the reward module 125 may check the transfer details of cryptocurrency or tokens between nodes recorded in a blockchain and check the transfer details to an actual bank account.

Operations performed by the control module 121, the contract module 123, and the reward module 125 described above may be understood as operations performed by the processor 120.

The input/output interface 130 may include a hardware interface or a software interface that allows a manager controlling the service server 100 to input specific information or outputs specific information to the manager.

The communication interface 140 enables the transmission and reception of information to and from the components included in the tracking service system 10 and the blockchain network system 20. To this end, the communication interface 140 may include a wireless communication module or a wired communication module.

Hereinafter, in the embodiment, the entity managing the service server 100 is a server administrator, the entity managing the organization terminal 200 is an organization, and the entity managing the user terminal 300 is a user. The entities operating in the tracking service system 10 are the service server 100, the organization terminal 200, and the user terminal 300. The entities operating in the blockchain network system 20 are the server node 100n, the organization node 200n, and the user node 300n. It should be noted, however, that the objects representing the same actual entities operating in the respective systems are grouped. For the convenience of understanding, in the description of the following embodiments, the "server manager, service server 100, and server node 100n" are referred collectively to as "service server 100"; the "organization manager, organization terminal 200, and organization node 200n" are referred collectively to as "organization terminal 200"; and the "user, user terminal 300, and user node 300n" will be referred collectively to as "user terminal 300."

In addition, the operations performed by the blockchain network system 20 acting as a subject are assumed to be executed within the blockchain network system 20 as a full node group verifies, records, and rewards the operations since from the generation of a transaction. However, the method of distributing, verifying, and recording transactions of nodes is not limited to the example above, and various other methods may also be applied.

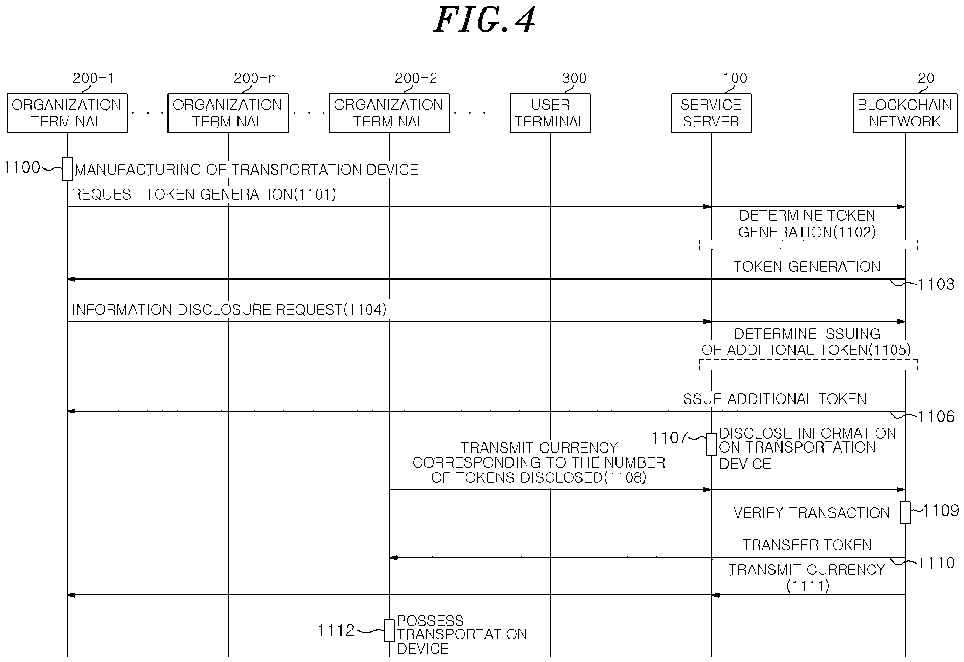

In what follows, an example of an operation performed by the service server 100 within the tracking service system 10 and the blockchain network system 20 will be described with reference to FIGS. 4 to 10.

FIG. 4 is a flow diagram of an operation performed in an example of manufacturing and distribution by the service server 100 according to one embodiment.

Referring to FIG. 4, the organization terminal 200-1 of a manufacturing organization that manufactures transportation devices may have manufactured a transportation device (step 1100).

The organization terminal 200-1 may generate a token generation request message to specify a manufactured transportation device in the blockchain network system 20 and transmit the token generation request message to the service server 100 or the blockchain network system 20 (step 1101).

The token generation request message may include a serial number that specifies a manufactured transportation device, a QR code, type of the transportation device, manufacturer information, a model name, a vehicle identification number, parts information, manufacturing year, or information on a requested price at which the manufacturer wishes to sell the corresponding transportation device.

The service server 100 or the blockchain network system 20 may receive a token generation request message from the organization terminal 200-1. The service server 100 or the blockchain network system 20 may issue a token specifying a transportation device based on the token generation request message to the blockchain account information (for example, a blockchain wallet of the organization node) of the organization terminal 200-1.

As one example, the reward module 125 of the service server 100 may calculate the price of a transportation device and the number of tokens corresponding to the price of the transportation device based on the information in a received token generation request message (step 1102) and issue the tokens to the blockchain account of the organization terminal 200-1 (step 1103).

As one example, the contract module 123 of the service server 100 may pre-generate, in the blockchain network system 20, a first smart contract compliant with a rule specifying to calculate the number of tokens to be issued based on the information of the token generation request message and issue a token specifying a transportation device to the blockchain account of an entity sending the token generation request message. When a token generation request message is generated according to the first smart contract, the blockchain network system 20 may calculate the price of the corresponding transportation device and the number of tokens corresponding to the price of the transportation device based on the information included in the token generation request message (step 1102) and issue the tokens to the blockchain account of the organization terminal 200-1 (step1103).

As one example, the service server 100 or the first smart contract may generate a token specifying a transportation device by combining information included in the token generation request message and the subscriber information of the organization terminal 200-1 and calculating the combined information according to a predetermined hash generation algorithm.

As one example, since the issued token specifies a transportation device, transfer may be restricted depending on the situation.

For example, a full node may agree to allow a transaction to transfer a token only when the owner of the corresponding transportation device is changed.

For example, a smart contract may include a digital instruction compliant with a rule that allows a token holder to transfer the token only when the owner of the corresponding transportation device is changed. For example, a rule may be applied, which states that a token is transferred only when the account holding the token receives cryptocurrency corresponding to the token from an account that wants to purchase the transportation device, and the corresponding token is frozen unless otherwise a special case happened.

In other words, a token according to an embodiment of the present disclosure operates as an independent token issued for each object to specify each object of a transportation device. A different token may be issued for each object, even if the transportation device is of the same model. The token may match the price of cryptocurrency used in the blockchain network system 20. The number of issued tokens may indicate the price of a transportation device, and the holder of the issued tokens may indicate the entity possessing the corresponding transportation device.

The organization terminal 200-1 may be specified as an entity that manufactured the transportation device by holding the token issued by specifying the corresponding transportation device in the blockchain account and being recorded as the token's first owner. The organization terminal 200-1 may be recorded as being in possession of the corresponding transportation device until the token is moved to another blockchain account. A block for generating the corresponding token may record information on the token owner and the transportation device together. For example, token information may include a manufacturer, a model name, a vehicle identification number, important parts, the origin of parts, an assembly place, a quality inspector, confirmation date and time, a shipping place, a shipping destination, shipping date and time, and information on a certification body for each item.

To sell an owned transportation device to another organization or consumer, the organization terminal 200-1 may transmit the corresponding transportation device's information disclosure request message to the service server 100 or the blockchain network system 20 (step 1104). The information disclosure request message may include margin information to be added by an entity holding a token in addition to the currently issued tokens.

The service server 100 or the blockchain network system 20 may receive the information disclosure request message and additionally issue a token corresponding to the margin information.

As one example, the reward module 125 of the service server 100 may additionally issue a number of tokens corresponding to the margin price desired by the organization terminal 200-1 based on the margin information included in the received information disclosure request message (step 1105) and transfer additionally issued tokens to the blockchain account of the organization terminal 200-1 (step 1106).

As one example, the contract module 123 of the service server 100 may pre-generate, in the blockchain network system 20, a second smart contract compliant with a rule specifying to determine the number of tokens to be issued based on the margin information of the information disclosure request message and issue an additional token to the blockchain account of an entity sending a token generation request message. The blockchain network system 20 may verify the corresponding token generation request message according to the second smart contract to additionally issue a number of tokens corresponding to the price of the margin information (step 1105) and transfer the additionally issued tokens to the blockchain account of the organization terminal 200 (step 1106). The second smart contract may include a digital instruction compliant with a rule that specifies to burn the additionally issued tokens when the corresponding transportation device is not sold within a predetermined period or when information disclosure is withdrawn.

The service server 100 may disclose information on the blockchain ledger including all of the records about the creation, transfer, issuing, and burning of tokens for the corresponding transportation device to the platform providing a tracking service based on the information disclosure request message (step 1107).

The organization terminal 200-2 of a distribution organization wishing to purchase a transportation device possessed by the organization terminal 200-1, to purchase the transportation device, may transmit currency corresponding to the number of tokens disclosed on the platform providing a tracking service to the service server 100 or the blockchain network system 20 (step 1108).

For example, when the organization terminal 200-2 transmits commodity money to the service server 100, the service server 100 may receive commodity money at a price corresponding to the number of tokens disclosed through a bank account (step 1108). When the reward module 125 of the service server 100 confirms the deposit of the corresponding commodity money (step 1109), the reward module 125 may request the organization terminal 200-1 to transfer the token specifying the corresponding transportation device to the blockchain account of the organization terminal 200-2. Also, the reward module 125 may request the organization terminal 200-1 or the blockchain network system 20 to deliver the corresponding transportation device. After determining that all the requests have been fulfilled, the reward module 125 may deposit the commodity money received from the organization terminal 200-2 into the bank account of the organization terminal 200-1 (step 1111).

In this case, the contract module 123 of the service server 100 may pre-generate, in the blockchain network system 20, a third smart contract compliant with a rule specifying to change a token holder by transferring the corresponding token to the blockchain account of an entity that has transmitted the cryptocurrency when transmission of the cryptocurrency at a price corresponding to a specific token to a predetermined contract account and a transaction message due to reception of a transportation device are confirmed and record the change of the holder of the transportation device. In this case, when the organization terminal 200-2 deposits cryptocurrency into the contract account, the blockchain network system 20 may confirm the transfer of cryptocurrency at a price corresponding to the number of tokens disclosed according to the third smart contract. When it is confirmed that the organization terminal 200-2 has received a transaction message for receiving the transportation device from the organization terminal 200-1 (step 1109), the blockchain network system 20 may transfer the token held in the blockchain account of the organization terminal 200-1 to the blockchain account of the organization terminal 200-2 (step 1110). The third smart contract may include a digital instruction compliant with a rule specifying to record, in a block, a transaction including transfer information for moving the token and information on a token recipient.

The blockchain account of the organization terminal 200-2 may receive the token issued by specifying the corresponding transportation device and be recorded as a current holder of the token. Thus, the transportation device may be recorded as being held until the token is moved to the blockchain account of another entity. Also, information on the token holder and the transportation device may be recorded together in a block for the corresponding token transfer. For example, the block may include information on a distributor, a model name, a vehicle identification number, important parts, a shipping place, a shipping destination, shipping date and time, and a certification body for each item.

Meanwhile, although the example of FIG. 4 describes a distribution process between the organization terminal 200-1 and the organization terminal 200-2, the operations according to the embodiment described above may still be applied among individual entities shown in FIG. 4 encompassing the organization terminal 200-1, the organization terminal 200-n, and the organization terminal 200-2 up to the user terminal 300, which is the end consumer.

According to the embodiment of FIG. 4, the organization terminal 200-1 and the organization terminal 200-2, which are the entities participating in the generation of a transaction due to the change of ownership; and a full node group participating in the verification of transactions generated by individual entities may get rewards of cryptocurrency according to the rules of the blockchain system 20 described with reference to FIG. 2.

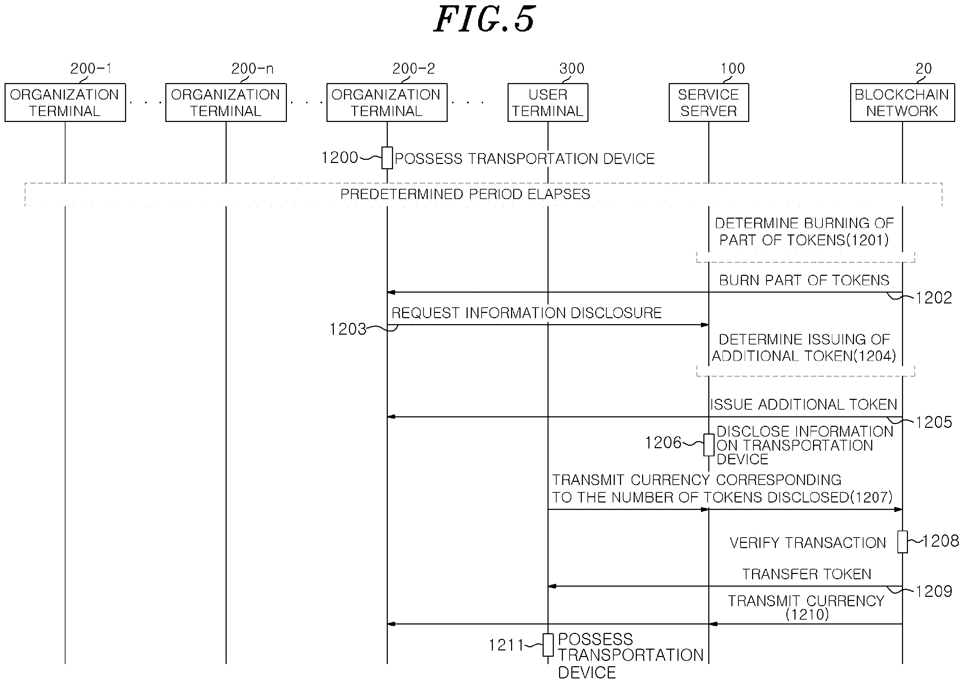

FIG. 5 is a flow diagram of an operation performed in an example of end consumer sale by a service server 100 according to one embodiment.

Referring to FIG. 5, the organization terminal 200-2 may have purchased a transportation device from a manufacturer or a higher level distributor and be holding the transportation device (step 1200).

The service server 100 or the blockchain network system 20 may determine the number of tokens to burn by considering depreciation as a predetermined period elapses while the organization terminal 200-2 holds the transportation device (step 1201).

The service server 100 or the blockchain network system 20 may burn some of the tokens issued for the transportation device based on the determined number of tokens to burn (step 1202).

As one example, the control module 121 of the service server 100 may burn a number of issued tokens corresponding to the ratio calculated considering a difference between the manufacturing and current times. For example, the control module 121 may burn a number of tokens corresponding to a ratio of (current year - release year) * x (for example, x is 0.1). The x may be determined based on the information on the transportation device received at the time of token issuance. In addition to the constant value applied in the above example, x may take the form of a decreasing function with (current year - release year) as an input.

As one example, the contract module 123 of the service server 100 may pre-generate, in the blockchain network system 20, a fourth smart contract compliant with a rule specifying to automatically burn a preconfigured number (for example, (current year - release year) * x) of tokens when a predetermined period elapses after a token specifying a transportation device is generated. The fourth smart contract may include a digital instruction compliant with a rule specifying to burn a token in the form of an exponentially decreasing function, a logarithmically decreasing function, or an n-th order decreasing function when a predetermined period elapses.

According to the process above, depreciation of the value of a transportation device may be compensated by burning part of issued tokens as time passes before the manufactured transportation device reaches an end consumer.

The user terminal 300 may purchase a transportation device according to the information disclosed by the organization terminal 200-2. At this time, since the processes of steps 1203 to 1211 of FIG. 5, which correspond to the processes of information disclosure and purchase of the transportation device, may be applied in the same manner as the processes of steps 1104 to 1112 of FIG. 4, repeated descriptions will be omitted.

Meanwhile, although the example of FIG. 5 describes a distribution process between the organization terminal 200-2 and the user terminal 300, the operations according to the embodiment described above may still be applied among individual entities shown in FIG 5 encompassing the organization terminal 200-1, the organization terminal 200-n, and the organization terminal 200-2 up to the user terminal 300, which is the end consumer.

According to the embodiment of FIG. 5, the organization terminal 200-2 and the user terminal 300, which are the entities participating in the generation of a transaction due to the change of ownership; and a full node group participating in the verification of transactions generated by individual entities may get rewards of cryptocurrency according to the rules of the blockchain system 20 described with reference to FIG. 2.

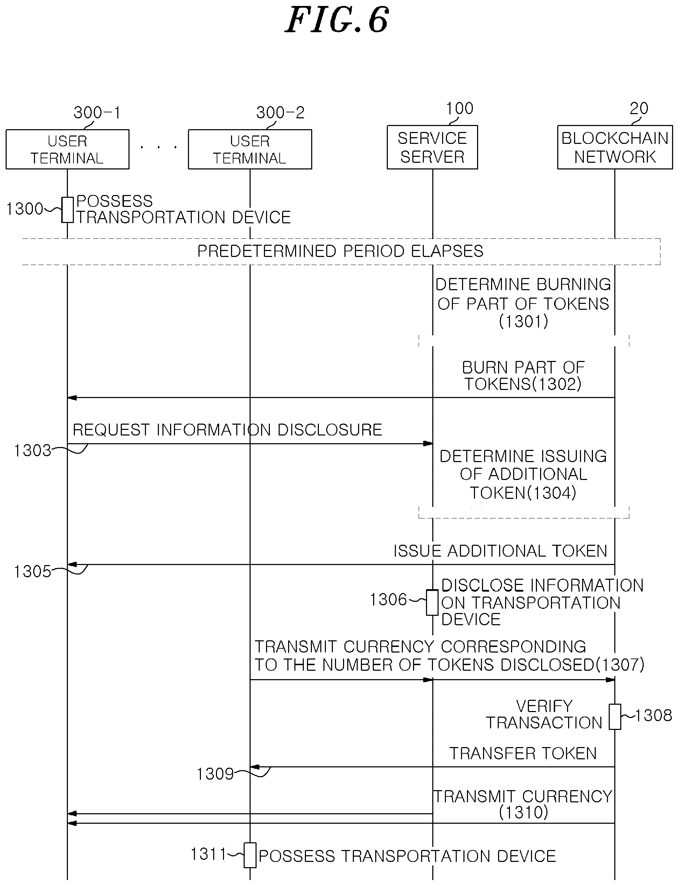

FIG. 6 is a flow diagram of an operation performed in an example of second-hand trading by a service server 100 according to one embodiment.

Referring to FIG. 6, the user terminal 300-1 may have purchased a transportation device and be holding the transportation device (step 1300).

The service server 100 or the blockchain network system 20 may determine the number of tokens to burn by considering depreciation as a predetermined period elapses while a specific user terminal 300-1 holds the transportation device (step 1301).

The service server 100 or the blockchain network system 20 may burn some of the tokens issued for the transportation device based on the determined number of tokens to burn (step 1302).

As one example, the control module 121 of the service server 100 may burn a number of issued tokens corresponding to the ratio calculated considering a difference between the manufacturing and current times. For example, the control module 121 may burn a number of tokens corresponding to a ratio of (current year - release year) * x (for example, x is 0.15). The x may be determined based on the information on the transportation device received at the time of token issuance. In addition to the constant value applied in the above example, x may take the form of a decreasing function with (current year - release year + 1) as the input.

As one example, the contract module 123 of the service server 100 may pre-generate, in the blockchain network system 20, a fifth smart contract compliant with a rule specifying to automatically burn a preconfigured number (for example, (current year - release year + 1) * x) of tokens when a predetermined period elapses after a token specifying a transportation device is generated. The fifth smart contract may include a digital instruction compliant with a rule specifying to burn a token in the form of an exponentially decreasing function, a logarithmically decreasing function, or an n-th order decreasing function when a predetermined period elapses.

According to the process above, depreciation of the value of a transportation device may be compensated by burning part of issued tokens as time passes after the user possesses the transportation device.

Afterward, the user terminal 300-2 may purchase a transportation device according to the information disclosed by the user terminal 300-1. At this time, since the process of steps 1301 to 1311 of FIG. 6, which corresponds to the process of second-hand trading, may be applied in the same manner as the process of steps 1104 to 1112 of FIG. 4, repeated descriptions will be omitted.

Meanwhile, although the example of FIG. 5 describes a distribution process between the organization terminal 200-2 and the user terminal 300, the operations according to the embodiment described above may still be applied among individual entities shown in FIG. 5 encompassing the organization terminal 200-1, the organization terminal 200-n, and the organization terminal 200-2 up to the user terminal 300, which is the end consumer.

According to the embodiment of FIG. 6, the organization terminal 300-1 and the user terminal 300-2, which are the entities participating in the generation of a transaction due to the change of ownership; and a full node group recording the transaction information generated by the individual entities in a block may get rewards of cryptocurrency according to the rules of the blockchain system 20 described with reference to FIG. 2.

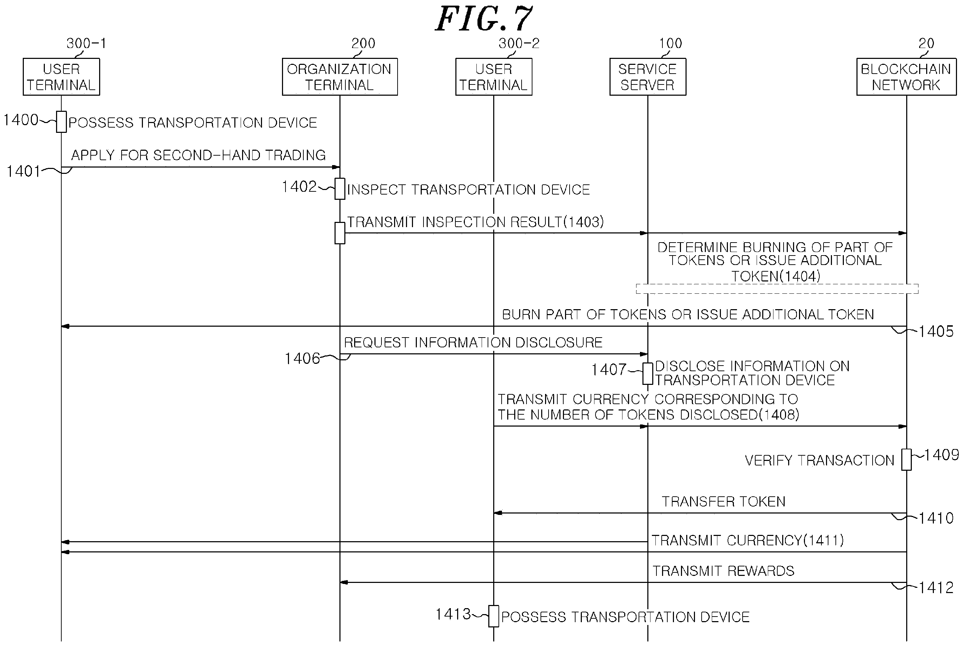

FIG. 7 is a flow diagram of an operation performed in an example of second-hand trading via a trading agency by a service server 100 according to one embodiment.

Referring to FIG. 7, the user terminal 300-1 may have purchased a transportation device and be holding the transportation device (step 1400).

The user terminal 300-1 may apply for proxy trading through the organization terminal 200 of an entity that trades a used transportation device on behalf of an applicant (step 1401).

The organization terminal 200 may perform an inspection on preconfigured items to examine the objective state of the transportation device of the user terminal 300-1 (step 1402).

The organization terminal 200 may inspect the preconfigured items to generate an inspection result message and then transmit the generated message to the service server 100 or the blockchain network system 20 (step 1403).

The inspection result message may include evaluation information on the preconfigured items to inspect for the transportation device. For example, the preconfigured items may include evaluation information obtained by subdividing and evaluating the items of the respective categories of non-destructive inspection, appearance evaluation, and performance evaluation.

The service server 100 or the blockchain network system 20 may determine to change the number of issued tokens based on the inspection information for the transportation device (step 1404). For example, the service server 100 or the blockchain network system 20 may issue an additional token corresponding to the determined inspection information or burn an existing token (step 1405).

As one example, the control module 121 of the service server 100 may compare the price of a transportation device calculated based on the inspection result message with the price corresponding to the number of currently issued tokens. Then the control module 121 may issue additional tokens or burn part of existing tokens to make the current number of tokens equal to the price of the transportation device newly calculated according to the inspection.

As one example, the contract module 123 of the service server 100 may pre-generate, in the blockchain network system 20, a sixth smart contract compliant with a rule specifying to compare the price of a transportation device calculated based on the inspection result message for preconfigured items with the price corresponding to the number of currently issued tokens and additionally issue a token mapped to the transportation device or burn part of existing tokens to make the current number of issued tokens equal to the price of the transportation device calculated according to the inspection. Through the sixth smart contract, the blockchain network system 20 may calculate the price of the transportation device according to the inspection information using the price pre-mapped for the preconfigured items with respect to the items included in the inspection information and additionally issue tokens or burn part of existing tokens to make the calculated price equal to the current number of issued tokens. The blockchain network system 20 may record, in a block, information included in the inspection result message together with the information related to additional issuance of tokens or burning part of existing tokens.

According to the process above, since the organization terminal 200 objectively evaluates the transportation device of the user terminal 300-1 and newly calculates the value of the transportation device, the actual value of the transportation device may be assessed by increasing the number of issued tokens or burning part of existing tokens.

Afterward, the organization terminal 200 may disclose information on the transportation device, and the user terminal 300-2 may purchase the transportation device. At this time, since the process of steps 1406 to 1413 of FIG. 7, which corresponds to the process of second-hand trading, may be applied in the same manner as the process of steps 1104 to 1112 of FIG. 4, repeated descriptions will be omitted.

According to the embodiment of FIG. 7, not only the user terminal 300-1 and the user terminal 300-2, which are the entities participating in the generation of a transaction due to the change of ownership but also the organization terminal 200 participating in second-hand trading as a proxy may get rewards.

Further, the organization terminal 200 participating in the second-hand trading as a proxy may additionally issue a token (for example, through the second smart contract) by setting the margin information directly when an information disclosure request occurs (step 1406). When the currency corresponding to the number of tokens disclosed by the user terminal 300-2 is transmitted (step 1408), the organization terminal 200 may get cryptocurrency or commodity money rewards, which correspond to the margin information.

Further, a full node group that records transaction information generated by individual entities in a block may receive cryptocurrency rewards according to the rule of the blockchain network system 20 described in FIG. 2.

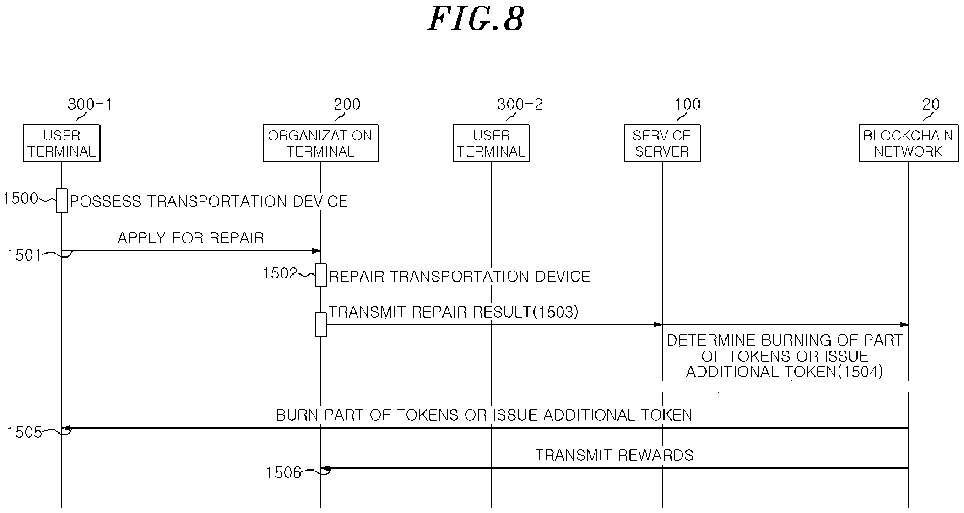

FIG. 8 is a flow diagram of an operation performed in an example of repair of a transportation device by the service server 100 according to one embodiment.

Referring to FIG. 8, the user terminal 300-1 may have purchased a transportation device and be holding the transportation device (step 1500).

The user terminal 300-1 may apply for repair of the transportation device to the organization terminal 200 of an entity performing repair of transportation devices (step 1501).

The organization terminal 200 may perform an inspection on preconfigured items to examine the objective state of the transportation device of the user terminal 300-1 (step 1502).

The organization terminal 200 may perform repairs, check the state of the corresponding transportation device, generate an inspection result message, and then transmit the generated message to the service server 100 or the blockchain network system 20.

The inspection result message may include evaluation information on the preconfigured items after repairing the transportation device. For example, the preconfigured items may include evaluation information obtained by subdividing and evaluating the items belonging to the respective categories of repaired items, non-destructive inspection, appearance evaluation, and performance evaluation.

The service server 100 or the blockchain network system 20 may determine to change the number of issued tokens based on the inspection information for the transportation device (step 1504). For example, the service server 100 or the blockchain network system 20 may issue an additional token corresponding to the determined inspection information or burn an existing token (step 1505).

As one example, the control module 121 of the service server 100 may compare the price of a transportation device calculated based on the inspection result message with the price corresponding to the number of currently issued tokens. Then the control module 121 may issue additional tokens or burn part of existing tokens to make the current number of tokens equal to the price of the transportation device newly calculated according to the inspection on the repair result.

As one example, the contract module 123 of the service server 100 may pre-generate, in the blockchain network system 20, a seventh smart contract compliant with a rule specifying to compare the price of a transportation device calculated based on the inspection result message for preconfigured items with the price corresponding to the number of currently issued tokens after repair is proceeded and additionally issue a token mapped to the transportation device or burn part of existing tokens to make the current number of issued tokens equal to the price of the transportation device calculated according to the inspection. Through the seventh smart contract, the blockchain network system 20 may calculate the price of the transportation device according to the inspection information using the price pre-mapped for the preconfigured items with respect to the items included in the inspection information after the repair is proceeded and additionally issue tokens or burn part of existing tokens to make the calculated price equal to the current number of issued tokens. The blockchain network system 20 may record, in a block, information included in the inspection result message together with the information related to additional issuance of tokens or burning part of existing tokens.

According to the process above, since the organization terminal 200 newly calculates the objectively evaluated value after the transportation device of the user terminal 300-1 is repaired, the actual value of the transportation device may be assessed by increasing the number of issued tokens or burning part of existing tokens.

According to the embodiment of FIG. 8, not only the user terminal 300-1, which is the entity generating a transaction from the information on the repair, but also the organization terminal 200 participating in the repair may get rewards.

Further, a full node group that records transaction information generated by individual entities in a block may receive cryptocurrency rewards according to the rule of the blockchain network system 20 described in FIG. 2.

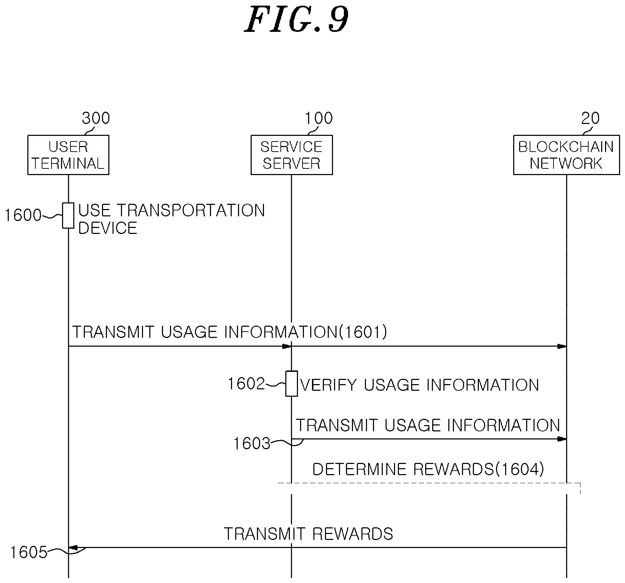

FIG. 9 is a flow diagram of an operation performed in an example of using a transportation device by a service server 100 according to one embodiment.

Referring to FIG. 9, the user terminal 300 may be in a state of using a transportation device owned (step 1600).

The user terminal 300 may sense the user's usage information of a transportation device and transmit the information to the service server 100 or the blockchain network system 20 (step 1601). For example, the user terminal 300 may sense the information on the distance traveled by the transportation device, the time for which the transportation device has been used, the number of rotations of wheels of the transportation device, the rotational speed of the wheels of the transportation device, the time for which the wheels of the transportation device have rotated, movement locations, amount of exercise, amount of calories consumed, or amount of carbon emission reduction; and transmit the sensed information to the service server 100 or the blockchain network system 20.

As one example, the transportation device may include a home training bike. For example, when the user rotates the wheels by operating the home training bike, the user terminal 300 may sense the distance virtually traveled by the rotating wheels.

Also, after verifying the usage information generated by the user terminal 300 (step 1602), the service server 100 may transmit the usage information to the blockchain network system 20 (step 1603). For example, the service server 100 may determine whether the information received from the user terminal 300 falls within preconfigured ranges of speed, distance, and time achievable by a human.

The service server 100 or the blockchain network system 20 may make cryptocurrency rewards carried out in the blockchain network system 20 transferred to the blockchain account of the user terminal based on the usage information on a transportation device (step 1604).

As one example, the reward module 125 of the service server 100 may determine rewards for the traveled distance and use time of a transportation device calculated based on the usage information and make the amount of the determined cryptocurrency transferred from the blockchain account held by the service server 100 to the blockchain account of the user terminal.

As one example, the contract module 123 of the service server 100 may pre-generate, in a blockchain network system 20, a eighth smart contract compliant with a rule specifying to determine rewards calculated based on usage information and publish cryptocurrency rewards carried out in the blockchain network system 20 to the blockchain account of a user terminal when transaction information including the usage information is received through a pre-specified contract account. When receiving the transaction information including the usage information according to the eighth smart contract through the pre-specified contract account (step 1601 or step 1603), the blockchain network system 20 may determine rewards due to the usage information (step 1604) and record, in a block, the information on the cryptocurrency rewards and the usage information included in the received transaction.

According to the embodiment of FIG. 9, rewards may be given to the user terminal 300, an entity generating information on the use of a transportation device as a transaction (step 1605). Further, a full node group that records the generated transaction information in a block may receive cryptocurrency rewards according to the rule of the blockchain network system 20 described in FIG. 2.

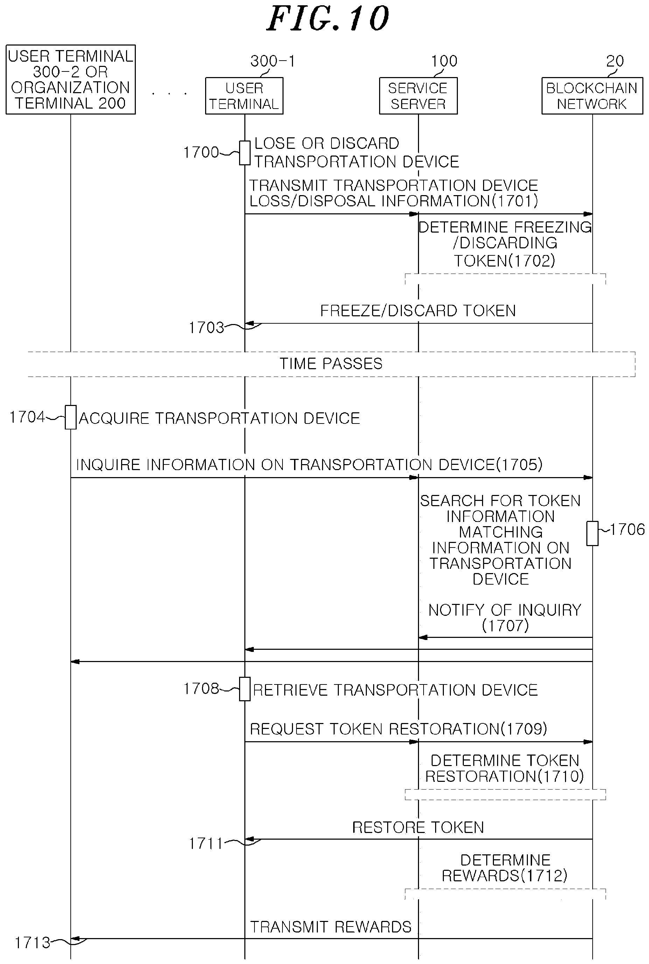

FIG. 10 is a flow diagram of an operation performed in an example of losing or discarding a transportation device by a service server 100 according to one embodiment.

Referring to FIG. 10, the user terminal 300-1 may be in a state in which an owned transportation device has been lost or discarded (step 1700).

The user terminal 300-1 may transmit information related to loss/disposal of a transportation device to the service server 100 or the blockchain network system 20 (step 1701).

The service server 100 or the blockchain network system 20 may determine to freeze or burn the entire tokens in the blockchain network system 20 based on the loss/disposal information on the corresponding transportation device (step 1702). For example, the service server 100 or the blockchain network system 20 may determine whether a current token holder has correctly generated a transaction including the loss/disposal information.

The service server 100 or the blockchain network system 20 may freeze or burn the entire tokens specifying a transportation device in the blockchain network system 20 according to the result determined with respect to the loss/disposal information of the corresponding transportation device (step 1703).

As one example, when it is determined that a transportation device has been lost, the service server 100 or the blockchain network system 20 may stop generating transactions related to the corresponding token by freezing the token to prevent token transactions until the corresponding transportation device is retrieved.

As one example, when it is determined that a transportation device has been discarded, the service server 100 or the blockchain network system 20 may burn all the tokens specifying the transportation device to end recording related to the corresponding tokens.

Meanwhile, there are cases that after some time is passed, the lost transportation device may be found by the user terminal 300-2 or the organization terminal 200 (step 1704).

The user terminal 300-2 or the organization terminal 200 holding the lost transportation device may inquire about the corresponding transportation device (step 1705). For example, the user terminal 300-2 or the organization terminal 200 may read the information on a serial number or QR code specifying the transportation device and inquire about token generation details matching the corresponding transportation device information through a tracking service according to the embodiment of the present disclosure. An embodiment of the corresponding inquiry may include a case where a specific entity requests registration of a stolen transportation device to register the corresponding transportation device in the tracking service.

The service server 100 or the blockchain network system 20 may search for token information matching the transportation device information according to the information inquiry (step 1706). In the existence of matching token information, execution of the inquiry may be notified to the user terminal 300-1, the user terminal 300-2, or the organization terminal 200, which are the entities related to the lost transportation device (step 1707). Accordingly, the user terminal 300-1, the original owner of the transportation device, may request the user terminal 300-2 or the organization terminal 200 that has acquired the lost transportation device to return the transportation device and retrieve the transportation device (step 1708).

After retrieving the transportation device, the user terminal 300-1 may request the service server 100 or the blockchain network system 20 to restore the frozen token (step 1709).

The service server 100 or the blockchain network system 20 may determine whether a current token holder has correctly generated a transaction including the restoration request (step 1710) and restore transaction generation rights by unfreezing the token specifying the corresponding transportation device (step 1711).According to the embodiment of FIG. 10, the service server 100 or the blockchain network system 20 may check the information on token restoration and retrieval of a transportation device (step 1712) and transmit rewards of cryptocurrency or commodity money to the user terminal 300-2 or the organization terminal 200, which is the entity generating inquiry information as a transaction by acquiring the transportation device (step 1713). Also, a full node group that records the generated transaction information in a block may receive cryptocurrency rewards according to the rule of the blockchain network system 20 described in FIG. 2.

According to the embodiments described above, events occurring throughout the life cycle of a transportation device, such as manufacturing, distribution, purchase, sale, second-hand trading, repair, use, loss, and disposal, may be recorded using blockchain technology. For example, since the recording is carried out using a block recording method based on the consensus of full nodes certified in the blockchain ecosystem, reliability of the recording is guaranteed, and through rewarding of the entities related to the recording activity, the entities participating in the service according to the embodiment are encouraged to maintain the ecosystem voluntarily.

According to the embodiments above, each transportation device object may be specified by issuing a token using the information of the transportation device. In addition, the price of a transportation device may be adjusted transparently by distributing a smart contract that additionally issues a token mapped to the transportation device or burn part of existing tokens to the blockchain network system depending on the situations encountered throughout the life cycle of the transportation device.

Various embodiments of the present disclosure and terms used therein are not intended to limit the technical characteristics disclosed in the present disclosure to the specific embodiments, which should be understood to include various modifications, equivalents, or substitutes of the corresponding embodiment. Regarding the description of the drawings, like reference numerals may be given to substantially like parts. A singular expression of a noun corresponding to an item may include one or more items unless relevant context explicitly dictates otherwise.

In the present disclosure, each of the phrases such as "A or B," "at least one of A and B," "at least one of A or B," "A, B, or C," "at least one of A, B, and C," and "at least one of A, B, or C" may include all possible combinations of the items listed together in the corresponding phrase. Terms such as "first" or "second" may be used simply to distinguish one constituting element from the other constituting element and do not limit the corresponding constituting elements in favor of another aspect (for example, importance or order). When a particular (for example, first) constituting element is said to be "coupled" or "connected" to another (for example, second) constituting element with or without the term "functionally" or "communicatively," it means that the particular constituting element may be linked to another constituting element directly (for example, in a wired manner), wirelessly, or through a third constituting element.

The term "module" used in the present disclosure may include a unit implemented using hardware, software, or firmware. For example, the term "module" may be used interchangeably with a term such as logic, logic block, component, or circuit. A module may be an integral component or a minimum unit of a component or a part thereof that performs one or more functions. For example, according to one embodiment, a module may be implemented in the form of application-specific integrated circuit (ASIC).

Various embodiments of the present disclosure may be implemented as software (for example, a program) including one or more instructions stored in a storage medium (for example, memory) readable by a device (for example, an electronic device). The storage medium may include a random access memory (RAM), a memory buffer, a hard drive, a database, an erasable programmable read-only memory (EPROM,) an electrically erasable read-only memory (EEPROM), a read-only memory (ROM) and/or the like.

Also, the processor according to the embodiments of the present disclosure may call at least one instruction among one or more stored instructions from the storage medium and execute the instruction called. This operation enables a device to perform at least one function according to at least one instruction called. The one or more instructions may include code generated by a compiler or code executable by an interpreter. The processor may be a general-purpose processor, a field programmable gate array (FPGA), the ASIC, a digital signal processor (DSP) and/or the like.

A machine-readable storage medium may be provided in the form of a non-transitory storage medium. Here, the term "non-transitory" only indicates that the storage medium is an tangible device but does not include a signal (for example, electromagnetic waves). The term "non-transitory", therefore, does not distinguish a case in which data is stored in a storage medium semi-permanently from a case in which data is stored temporarily.

Methods according to various embodiments of the present disclosure may be provided by being included in a computer program product. The computer program product may be traded between sellers and buyers as a commodity. The computer program product may be distributed in the form of a machine-readable storage medium (for example, a CD-ROM) or directly online (for example, download or upload) through an application store (for example, Play Store) or between two user devices (for example, smartphones). In the case of online distribution, at least part of the computer program product may be at least stored temporarily or generated temporarily in a server of the manufacturer, a server of the application store, or a machine-readable storage medium such as a memory of a relay server.

According to various embodiments, each of the constituting elements (for example, a module or a program) may be composed of single or multiple entities. According to various embodiments, one or more constituting elements or operations may be omitted from among the corresponding constituting elements described above, or one or more other constituting elements or operations may be added. Alternatively or additionally, a plurality of constituting elements (for example, a module or a program) may be integrated into a single constituting element. In this case, the integrated constituting elements may perform one or more functions of each of the plurality of constituting elements in the same manner or in a similar manner as performed by the corresponding constituting element of the plurality of constituting elements before the integration. According to various embodiments, the operations executed by a module, a program, or another constituting element may be performed in a sequential, parallel, repetitive, or heuristic manner; or one or more operations may be performed in a different order or omitted, or one or more different operations may be added to the operations.

## Claims

1. A service server providing a tracking service for a transportation device based on a blockchain network system, the service server comprising:
at least one memory storing instructions for performing predetermined operations; and
at least one processor configured to execute the instructions by being coupled operatively with the at least one memory,
wherein the at least one processor is configured to
receive an information disclosure request for trading, distribution, or repair of the transportation device from a first terminal of an entity holding a token specifying the transportation device or a second terminal of an organization performing trading, distribution, or repair of the transportation device as a proxy;
disclose information on the transportation device to a platform providing the service based on the information disclosure request;
receive, from a third terminal of an entity purchasing the transportation device, transmission information on currency at a price corresponding to the token; and
transmit the token to a node managed by the third terminal and transferring the currency to an account managed by the first terminal based on verification of the transmission information.

2. The service server of claim 1, wherein the processor is further configured to
receive a request for generating the token specifying the transportation device from the first terminal when the entity of the first terminal is a manufacturer that has manufactured the transportation device; and
issue the token specifying the transportation device to a node managed by the first terminal based on the token generation request,
wherein the token is issued based on a smart contract compliant with a rule specifying to move the token to another blockchain account only when the owner of the transportation device is changed.

3. The service server of claim 1 or 2, wherein the information disclosure request includes information on a margin to be added to a price about the token by an entity holding the token,
in disclosing the information, the processor additionally issue a token corresponding to the margin information on the transportation device, and
the processor is further configured to generate, in the blockchain network system, a smart contract compliant with a rule specifying to additionally issue a token based on the information disclosure request by the entity holding the token.

4. The service server of any one of claims 1 to 3, wherein the processor is further configured to generate, in the blockchain network system, a smart contract compliant with a rule specifying to record change of the owner of the transportation device through change of the holder of the token by transferring the token to a node of an entity that has transmitted cryptocurrency at a price corresponding to the token when transmission of the cryptocurrency to a pre-designated contract account is confirmed, and
the smart contract includes a digital instruction compliant with a rule specifying to move the token only when the owner of the transportation device is changed.

5. The service server of any one of claims 1 to 4, wherein the processor is further configured to generate, in the blockchain network system, a smart contract compliant with a rule specifying to burn a preconfigured number of tokens as a predetermined period elapses after the token is generated, and
the smart contract is activated at a preconfigured time to determine a ratio of currently issued tokens to be burned according to ratio calculation of (current year - release year + 1) * x (where x is a constant predetermined based on the information of the transportation device recorded at the time of issuing the token).

6. The service server of any one of claims 1 to 5, wherein the processor is further configured to generate, in the blockchain network system, a smart contract compliant with a rule specifying to burn a preconfigured number of tokens as a predetermined period elapses after the token is generated, and
the smart contract includes a digital instruction compliant with a rule specifying to burn the token in the form of an exponentially decreasing function, a logarithmically decreasing function, or an n-th order decreasing function when the predetermined period elapses.

7. The service server of any one of claims 1 to 6, wherein, in the occurrence of transmission about the currency due to an information disclosure request of the second terminal, the processor is further configured to transmit part of the currency to an account managed by the second terminal.

8. The service server of any one of claims 1 to 7, wherein, in the occurrence of transmission about the currency due to an information disclosure request of the second terminal, the processor is further configured to transmit rewards of cryptocurrency carried out in the blockchain network system to a node managed by the second terminal.

9. The service server of any one of claims 1 to 8, wherein the processor is further configured to
receive inspection information on a result of inspecting the transportation device from the second terminal;
additionally issue or burn a token corresponding to the inspection information on the transportation device; and
transmit rewards of cryptocurrency carried out in the blockchain network system to a node managed by the second terminal.

10. The service server of claim 9, wherein the information disclosure request includes the inspection information on the result of inspecting the transportation device by the second terminal, and
in disclosing the information, the processor additionally issue or burn a token corresponding to the inspection information on the transportation device.

11. The service server of claim 9 or 10, wherein the processor is further configured to generate, in the blockchain network system, a smart contract compliant with a rule specifying to additionally issue or burn a token mapped to the transportation device based on scores for preconfigured items to be inspected with respect to the transportation device.

12. The service server of any one of claims 1 to 11, wherein the processor is further configured to
receive usage information of the transportation device from the first terminal of the entity holding the token;
transmit rewards of cryptocurrency carried out in the blockchain network system to a node managed by the first terminal based on the usage information of the transportation device; and
generate, in the blockchain network system, a smart contract compliant with a rule specifying to determine rewards calculated based on the usage information when a pre-designated contract account receives transaction information including the usage information and transmit the rewards of cryptocurrency carried out in the blockchain network system to the node managed by the first terminal.

13. The service server of any one of claims 1 to 12, wherein the processor is further configured to
receive loss information or disposal information of the transportation device from the first terminal of the entity holding the token;
freeze or burn the token based on the loss information or the disposal information of the transportation device;
notify the first terminal of an inquiry based on specific information on the transportation device when the inquiry is sensed;
withdraw freezing of the token when a request for restoring the token is received from the first terminal; and
transmit rewards of cryptocurrency carried out in the blockchain network system to a node managed by an entity performing inquiry based on information specifying the transportation device.

14. A service method performed by a service server providing a tracking service for a transportation device based on a blockchain network system, the service method comprising:
receiving a request for generating a token specifying the transportation device from a first terminal of an entity that has manufactured the transportation device;
issuing the token specifying the transportation device to a blockchain node managed by the first terminal based on the token generation request;
receiving transmission information on currency at a price corresponding to the token from a second terminal of an entity purchasing the transportation device; and
transmitting the token to a blockchain node managed by the second terminal and transferring the currency to an account managed by the first terminal.

15. A non-transitory computer-readable storage medium including computer-executable instructions which cause, when executed by a processor, the processor to perform a service server providing a tracking service for a transportation device based on a blockchain network system, the service server comprising:
at least one memory storing instructions for performing predetermined operations; and
at least one processor configured to execute the instructions by being coupled operatively with the at least one memory,
wherein the at least one processor is configured to
receive an information disclosure request for trading, distribution, or repair of the transportation device from a first terminal of an entity holding a token specifying the transportation device or a second terminal of an organization performing trading, distribution, or repair of the transportation device as a proxy;
disclose information on the transportation device to a platform providing the service based on the information disclosure request;
receive, from a third terminal of an entity purchasing the transportation device, transmission information on currency at a price corresponding to the token; and
transmit the token to a node managed by the third terminal and transferring the currency to an account managed by the first terminal based on verification of the transmission information.
